# EUROPEAN PATENT APPLICATION

(11) **EP 2 254 086 A1**
(43) Date of publication of application: **24.11.2010**
(21) Application number: 10004139.1
(22) Date of filing: 19.04.2010
(51) Int. Cl.: G06Q 30/00, H04L 29/08

(54) **Method and system for recognizing customer by using his mobile phone**

(30) Priority: 22.05.2009 KR 20090044981
(71) Applicant: Merlin Inc., Seodaemun-gu, Seoul (KR)
(72) Inventor: Kang, Kyung Hum, Yangcheon-gu (KR); Kim, Jung Shik, Yangcheon-gu (KR); Kim, Young Ki, Kyunggi-do (KR)
(74) Representative: Beier, Ralph

(57) **Abstract**

A customer recognition method and system using a mobile phone is provided. In the present invention, when a customer enters a communication area of an access point (AP) of a service provider, the access point communicates with a Bluetooth communication device embedded in a mobile phone of the customer, searches for BDA information of the customer, and transmits the BDA information to a local search server. The local search server extracts valid information of the customer from the customer's BDA information and transmits the extracted information to a central server. The central server confirms reservation and visit information using the information on the customer, extracts and determines attendant information of the service provider from an attendant information DB, creates customer recognition information by linking the customer information and the attendant information, and transmits the customer recognition information to an attendant of the service provider. A terminal of the attendant of the service provider receives the customer recognition information and externally displays the customer information so that the attendant of the service provider may use the customer information.

## Description

### BACKGROUND OF THE INVENTION

### 1. Field of the Invention

The present invention relates to a customer recognition method and system for easily recognizing specific customers, and more specifically, to a customer recognition method for easily recognizing specific customers and a customer recognition system appropriate thereto, in which when a customer approaches a search area of a service provider, information related to the customer is automatically searched for on the spot using a mobile phone possessed by the customer, and an attendant of the service provider promptly and properly greets the customer using the searched information.

### 2. Description of the Related Art

Recently, a large number of service providers are emerging due to the advancement of industries, and all of the service providers make an effort to provide their customers with further differentiated and special services. Such service providers are fully aware of the fact that the customers remain to be loyal only when the customers are satisfied with the services. The service providers devote themselves to providing further specialized high-quality services in order to draw customers' loyalty.

Generally, when a potential or real customer visits a specific service provider to be provided with a certain service, the customer expects the service provider to consistently provide the best service at all times in the same manner as before. Such a service starts from a guide desk area of the service provider.

From the viewpoint of the service providers, there always are VIP customers who need to be managed with special concerns compared with the other customers among a great number of potential or real customers. For the VIP customers, it is most important to recognize the VIP customers as soon as the customers enter the guide desk area and to provide the customers with an appropriate service. It is since that this can lead the customers to feel a good mood and satisfaction from the initial stage of the visit and the customers can be remained as loyal customers or secured as new loyal customers.

Considering these points, a service of recognizing a customer in advance as soon as the customer enters the front area of the service provider and approaching and heartily greeting the customer by an attendant of the service provider cannot be overemphasized. Luxurious restaurants, various kinds of hotels, a variety of financial institutions, golf resorts and the like can be presented as typical examples of the service provider.

A variety of methods are tried in order to provide such an early stage service.

The most general method today is employing experienced and skilled workers. However, this method is disadvantageous in that it is difficult to cultivate skilled workers. Moreover, although skilled workers are hired, they cannot work at the same place for 24 hours while paying consistent attention. Moreover, there is a fundamental limitation in that when a skilled worker is absent due to a shift work or a day off, the same service as is served by the skilled worker cannot be provided.

A variety of methods of using various information communication devices are introduced to overcome such limitation. However, in order to apply the method for providing customer service using an information communication device, first, a customer should not be required to carry any other information communication devices in addition to a generally possessed information communication device, second, it should be possible to automatically and immediately scan a customer without requesting a specific action from the customer when the customer approaches a guide desk area, and, third, the scanning should be performed only when the customer agrees, and the customer can refuse the scanning if the customer does not want to.

There is a method of using a global positioning system (GPS) as an information communication device. However, if this method is employed, a customer should possess a GPS device, and it is impossible to scan the customer when the customer enters a building. Therefore, this method is inappropriate as a method of providing customer recognition service.

A method of using a radio frequency identification (RFID) card is disadvantageous in that a customer should also possess an RFID card and the customer can be scanned only when the customer intentionally approaches a card reader. Therefore, this method is also inappropriate as a method of providing customer recognition service.

Further, in Korea Patent Publication No. 2002-21585, previously applied, "Customer management system using wireless bar code and method thereof," a customer should additionally possess a bar code, i.e., a customer management card, and contact the bar code to a bar code scanner. Therefore, it is extremely difficult to apply the method to a customer recognition system.

Furthermore, in Korea Patent Publication No. 2003-75424, previously applied, "Method of providing a variety of multi-services by communicating with Bluetooth-embedded portable terminal in specific space", when a customer possesses a portable terminal embedded with a Bluetooth chip and approaches a service area of a theater, a performance hall or the like, the portable terminal is connected to a local commander of a wireless communication service provider through a Bluetooth communication, and the local commander confirms reservation information as soon as the portable terminal is detected. When the reservation information is received based on confirmation information, the customer receives an admission ticket from the theater or the performance hall using the reservation information and enters the theater or the performance hall. Therefore, this method is disadvantageous in that a third party intervenes between the customer and the service provider. Furthermore, in this method, the service provider does not recognize the customer and almost does not participate in the service. In this state, the customer actively and dominantly confirms his or her reserved service and uses the confirmed service.

In the prior art described above, although service providers use a variety of methods in order to secure customers loyal to the service providers or continuously maintain loyalty of the customers, it is difficult to find an effective method that can be easily used by anybody in order to conveniently recognize a customer although a worker is not skilled.

### SUMMARY OF THE INVENTION

An object of the present invention is to solve the problems described above and to provide a customer recognition method for immediately and promptly recognizing a customer by a service provider using a mobile phone embedded with a Bluetooth module possessed by the customer without requesting any additional action or behavior from the customer when the customer enters a search area of the service provider.

The present invention is advantageous in that an attendant of a service provider can easily recognize a customer in advance while the customer is unnoticed although a Bluetooth function installed in a mobile phone possessed by the customer is utilized.

Another object of the present invention is to provide a customer recognition system for immediately and promptly recognizing a customer by a service provider using a mobile phone embedded with a Bluetooth module possessed by the customer without requesting any additional action or behavior from the customer when the customer enters a search area of the service provider.

According to an aspect of the present invention for achieving the objects, there is provided a customer recognition method comprising a customer's BDA information searching step (S10) of allowing an access point (AP) installed by a service provider to communicate with a Bluetooth communication device of a customer and to search for Bluetooth device address (BDA) information of the customer and transmit it to a local search server when the customer enters a search area of the service provider while possessing the information communication device with a Bluetooth module embedded; a customer's BDA information filtering step (S20) of determining whether or not the customer's BDA information is registered BDA information of a customer to be managed by the service provider and extracting and transmitting only customer's BDA information matching to a search condition to a central server; a customer recognition information creating step (S30) of extracting customer information from a customer information database (DB) using the filtered customer's BDA information, confirming reservation and visit information, extracting and determining information on an attendant of the service provider from an attendant information DB, creating customer recognition information by linking the customer information and the attendant information, and transmitting the customer recognition information to an attendant of the service provider; and a customer information utilizing step (S40) of receiving the customer recognition information from a terminal of the attendant of the service provider and externally displaying the customer information on a display unit of the terminal.

A mobile phone that can be used in the present invention is preferably a portable terminal embedded with a Bluetooth function. On the other hand, the terminal of the attendant of the service provider may be, for example, a notebook computer, a PDA, a mobile phone, or the like, and the mobile phone is the most preferable among these.

In addition, the present invention provides a customer recognition system particularly appropriate for performing the customer recognition method.

According to another aspect of the present invention, there is provided a customer recognition system comprising: local search servers installed a plurality of areas; a central server connected to each of the local search servers, for collecting various kinds of information transmitted from the local search servers, processing the collected information, and creating specific valid information; and a plurality of terminals connected to the central server to use information transmitted from the central server, wherein the local search server comprises: a BDA search unit for issuing a command for an access point installed by a service provider to detect existence of a Bluetooth communication device within a search area and receiving detected customer's BDA information from the access point; a BDA filter unit for filtering the customer's BDA information by determining whether the customer's BDA information received from the BDA search unit is BDA information of a customer registered in a customer BDA information DB, removing information repeated within a predetermined search period in case of a registered customer and removing information repeated within the predetermined search condition; and a search information transmitting unit for transmitting the filtered customer's BDA information to the central server, wherein the central server comprises: a search information receiving unit for receiving the customer's BDA information transmitted from the local search server; a customer information creating unit for creating customer information from a customer information DB using the received customer's BDA information; an attendant information creating unit for creating attendant information from an attendant information DB using the received customer's BDA information; a customer recognition information creating unit for creating customer recognition information by using the customer information and the attendant information; and a customer recognition information transmitting unit for transmitting the customer recognition information to an attendant of the service provider, and wherein the terminal comprises: a customer recognition information receiving unit for receiving the customer recognition information transmitted from the central server; and a display unit for allowing the attendant of the service provider to confirm the received customer recognition information through five senses.

In the present invention, the central server may store the customer recognition information in a customer recognition state DB so that the service provider may manage the customer recognition information and further comprise a customer recognition state analysis unit for creating useful data by analyzing and using the customer recognition information.

In the present invention, the terminal may include be any one selected from the group consisting of a desktop computer, a notebook computer, a PDA, and a mobile phone. At this point, the terminal may configure and provide customer's pictures, age, sex, favorite food, hobbies, peculiar facts, and the like based on the customer recognition information transmitted from the central server.

In the present invention, the terminal may further comprise an employee confirming unit for an attendant of the service provider to confirm whether he or she has provided needed services after confirming the customer information and kindly greeting the customer. If it is confirmed that the services are provided by the attendant through the employee confirming unit, the fact of providing the services is notified to the customer recognition state DB in the central server, and internal information of the customer recognition state DB is updated. If the terminal is a mobile phone, the customer recognition information transmitted from the central server can be displayed on the display unit in the form of a character message.

### BRIEF DESCRIPTION OF THE DRAWINGS

Fig. 1 is a block diagram showing a customer recognition method according to the present invention.
Fig. 2 is a view showing a preferred embodiment of a customer recognition system appropriate for implementing the customer recognition method according to the present invention.
Fig. 3 is a view showing a specific embodiment of the customer recognition system.

### DESCRIPTION OF THE PREFERRED EMBODIMENT

Hereinafter, a customer recognition method and a customer recognition system according to the present invention will be described in detail with reference to the accompanying drawings. Throughout the drawings, like reference numerals are used to designate like elements.

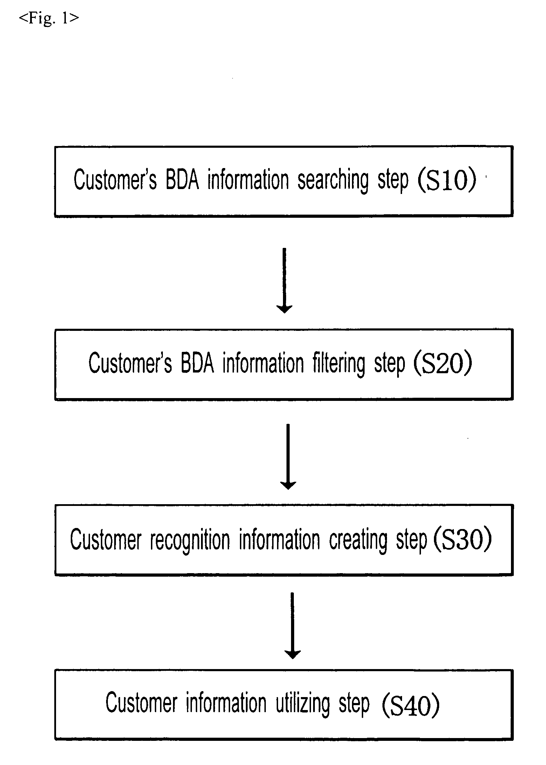

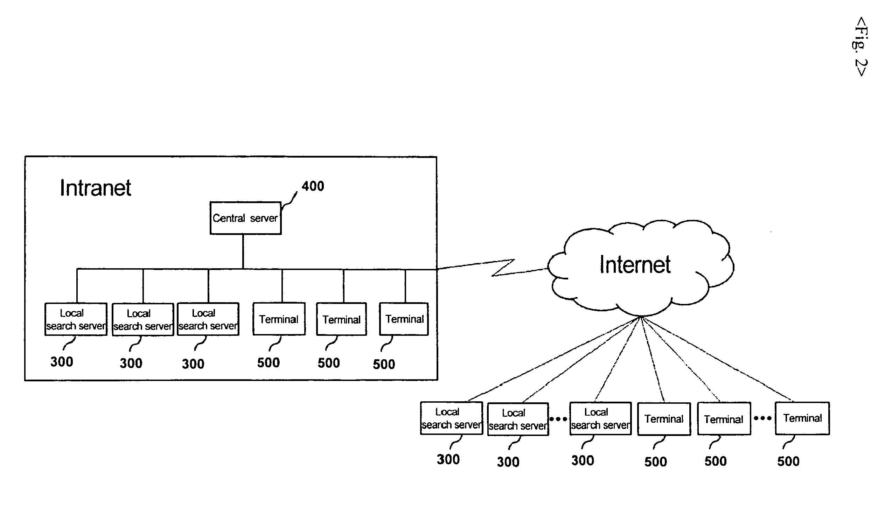

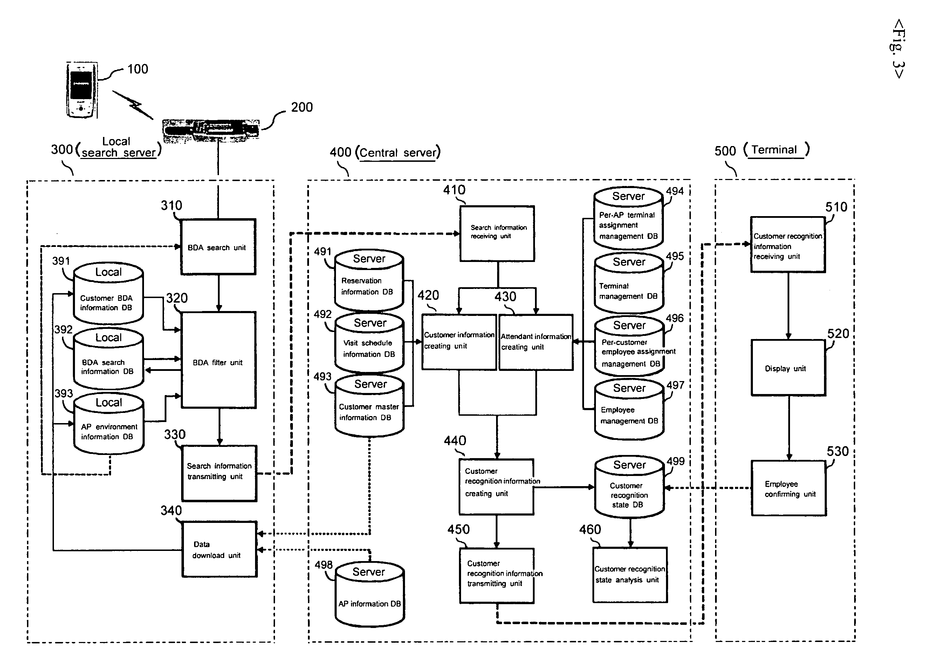

Fig. 1 is a block diagram showing a customer recognition method according to the present invention. Fig. 2 is a view showing a preferred embodiment of a customer recognition system appropriate for implementing the customer recognition method according to the present invention. Fig. 3 is a view showing a specific embodiment of the customer recognition system.

The customer recognition method according to the present invention comprises a customer's BDA information searching step (S10), in which BDA information of a customer is searched for by a BDA search unit 310 of a local search server 300 through an access point 200 connected to the search server.

In the present invention, when a certain customer enters a search area of a service provider, the access point 200 of the service provider automatically communicates with an information communication device of the customer and automatically searches for specific information on the customer. In the present invention, standardized communication specifications are used presently in order to induce a mobile phone of the customer to automatically communicate with the access point 200 of the service provider. Bluetooth communication is preferably used as a communication standard. The Bluetooth communication is a standard for a short distance communication, which enables communication in a distance of approximately 20 to 100 meters. On the other hand, when a certain customer enters a search area of a service provider, the customer walks into the area at a speed of 3 to 5 Km/h in average. A distance needed to recognize and greet the customer in an early stage is approximately 30 to 60 meters, and the Bluetooth communication is used to take advantage of time and space needed for previously recognizing the customer within the distance. Considering these points, a mobile phone embedded with a Bluetooth module is specifically selected in the present invention. In other words, information on the customer can be recognized in advance by specifically utilizing universality of the mobile phone (i.e., most of customers possess such a mobile phone in these days, and the mobile phone is the most generalized and universalized product) and communication medium performance of the portable mobile phone itself (i.e., the mobile phone has a function of searching for Bluetooth communication targets in the neighborhood by itself and communicating with the targets) in the present invention.

In the present invention, the access point 200 is installed in the local search server 300 located in a service search area where an attendant is disposed from a service provider. The access point 200 is capable of setting transmission power of Bluetooth access point hardware to -18 to 18 decibel (dB) and setting reception power to 1 to 4 decibel (dB), and a unique AP number is assigned to each access point 200. The access point 200 determines whether or not there exists a Bluetooth BDA in a service search area under the command of the BDA search unit 310. A preferable search area of the access point 200 is 20 to 100 meters, and the most preferable search area is 30 to 60 meters. In this case, transmission power of the Bluetooth access point 200 hardware is set to -18 to 0 dB, and the reception power is set to 1 to 4 decibel (dB). In the case of enlarging the search area, finding an obstacle, or experiencing an excessively low ambient temperature, the hardware setting can be changed to exceed the ranges of the transmission power and reception power.

In such a state, if a certain customer possessing a mobile phone embedded with a Bluetooth module enters the search area of the service provider, the access point 200 communicates with the mobile phone embedded with the Bluetooth module of the customer who enters the search area of the service provider. In the present invention, it is preferable to perform only an initial stage of the Bluetooth communication, without performing all the steps of the standardized Bluetooth communication.

Generally, communications among Bluetooth devices are performed in an operation of four consecutive steps, in which any one of the Bluetooth devices serves as a master, and the other Bluetooth devices serve as slaves. The operation comprises a basic search step, an intensified search step, a connection step, and a transmission step. In the basic search step, if the master transmits a signal in order to search for a slave, the slave responds with a BDA and a device type. In the intensified search step, if the master transmits a signal to the slave of the received BDA, the slave responds with a device name. In the connection step, the master and the slave interconnect with each other after performing mutual authentication. In the transmission step, the master and the slave communicate with each other by transmitting data to each other. Particularly, in the communication of the related art between Bluetooth devices, the BDA, the device type and the device name is necessarily acquired by continuously performing the basic search step and the intensified search step at search intervals of 15 to 50 seconds.

However, in the present invention, the access point 200 and the mobile phone of the customer may perform all of the four Bluetooth communication steps or only the initial basic search step. It is preferable to perform only the initial basic search step of the latter case. It is since that the access point 200 has already acquired the BDA and the device type of the customer's mobile phone in the basic search step, and it is sufficient to use the BDA information without requiring any other information. In addition, only the initial basic search step is preferably performed in order to promptly create and use needed information. For example, although 40 to 50 seconds are generally required to perform a complete Bluetooth communication through the four steps, the initial basic search step can be completed within 15 seconds. Generally, when only the basic search step is performed, the access point 200 may acquire the BDA and the device type of the customer's mobile phone within a short time period of 13 seconds after detecting the customer's mobile phone 100. A preferable search interval of the access point 200 is 7 to 15 seconds.

In the present invention, if the access point 200 searches for the customer's BDA information through the Bluetooth communication with the customer's mobile phone 100, it transmits the customer's BDA information to the BDA search unit 310 of the local search server 300. The BDA search unit 310 issues a command for performing a search at short intervals of less than 13 seconds, and the search interval is determined based on a search interval stored in an AP environment information DB 393. The most preferable search interval is 7 to 15 seconds. The BDA search unit 310 searches for a plurality of BDAs and device types, and useful BDA information includes a BDA, an AP number, an actual search date and time, and the like. Such BDA information is transmitted to the BDA search unit 310.

In the present invention, the access points 200 are installed in a plurality of search areas by the service provider, and one or more access points may be installed in the same search area. Accordingly, a plurality of access points 200 can simultaneously or sequentially search for BDA information of the same customer and transmit the searched BDA information to the local search server 300.

The customer recognition method according to the present invention comprises a customer's BDA information filtering step (S20), in which the local search server 300 confirms whether or not the customer's BDA information is BDA information of a registered customer, filters duplicated or repeated BDA information, and transmits the filtered BDA information to a central server 400.

In the present invention, a personal computer, a small-sized workstation, or an office automation (OA) apparatus having a central processing unit (CPU), memory, a hard disk, and the like, which is capable of searching for BDA, filtering BDA, transmitting search information, and downloading data, can be used as the local search server 300.

In the present invention, if the BDA search unit 310 transfers the customer's BDA information to a BDA filter unit 320, the BDA filter unit 320 first confirms whether or not the customer to be provided with the initial greeting service of the service provider is registered based on the customer's BDA information. To this end, the service provider previously selects customers to be provided with the customer recognition service of the present invention and registers information on the customers in the central server 400 in advance. The configuration and functions of the central server 400 will be described below.

In the present invention, the BDA filter unit 320 inquires the received customer's BDA information from a customer BDA information DB 391 and determines whether or not the received customer's BDA information is registered in the customer BDA information DB 391. If the received customer's BDA information is confirmed not to be registered in the customer BDA information DB 391, the customer's BDA information is discarded. It is since that the service provider does not provide the customer recognition service to all customers but provides the customer recognition service only to the customers satisfying criteria selected by the service provider. On the other hand, if the received customer's BDA information is confirmed to be registered in the customer BDA information DB 391, the process proceeds to the next step.

In the present invention, the BDA filter unit 320 does not transmit all of the customer's BDA information transmitted from the plurality of access points 200 to the central server 400, but removes duplicated or repeated customer's BDA information. This is to prevent generation of overload on the network or the central server 400.

In the present invention, if a plurality of customer's BDA information received from the access points 200 is the same within the search interval, the BDA filter unit 320 determines that they are duplicated, and discards the duplicated customer's information. The customer's BDA information is duplicated since the same access point 200 detects the same customer several times or different access points 200 connected to the same local search server 300 detects the same customer. Such a phenomenon occurs since a first access point 200 initially detects the customer when the customer walks into the search area of the service provider, and another access point 200 whose search area is overlapped with that of the first access point detects the same customer once more. In this case, since all the information is duplicated search data related to the same customer, it is totally unnecessary to use all of the information as valid data.

In the present invention, the BDA filter unit 320 records the initial and final search time of detecting the customer in a BDA search information DB 392.

In the present invention, if the customer's BDA information received from the access points 200 is searched again within a search condition after the final search time, the BDA filter unit 320 determines that the BDA information is duplicated, and discards the duplicated customer's BDA information. The search condition is stored in the AP environment information DB 393, and it is preferable to set the search condition in advance. The search condition may be adjusted to be suitable for service types provided by the service provider. The search condition is preferably 30 minutes to 3 hours approximately. For example, a service provider specializing in lunch may determine the search condition based on a time when the customer leaves the service provider after having a lunch, and a service provider specializing in dinner may determine the search condition based on a time when the customer finally leaves the service provider after enjoying a dinner. This is to process the customer's BDA information as repeated information although the access points 200 repeatedly detects the customer after the customer enters the search area of the service provider until the customer leaves the search area of the service provider.

In the present invention, the BDA filter unit 320 secures a customer number of a registered customer from the customer BDA information DB 391, removes duplicated or repeated information if the duplicated or repeated information is confirmed from the BDA search information DB 392, secures an AP number, an AP use, an AP installation location, and the like from the AP environment information DB 393, and updates an actual search time with a final search time into the BDA search information DB 392. The BDA filter unit 320 transfers the customer's BDA information to a search information transmitting unit 330, together with the AP number, AP use, AP installation location, actual search date and time, and the like.

In the present invention, the search information transmitting unit 330 places the customer's BDA information, AP number, AP use, AP installation location, customer number, actual search date and time, and the like as search information, and transmits the search information to the central server 400.

On the other hand, the local search server of the present invention preferably further comprises a data download unit 340. It is preferable that when the local search server 300 is booted or at a certain time point of a day, the data download unit 340 downloads the customer number, the BDA information and the like from a customer master information DB 493 of the central server 400 and stores the downloaded information in the customer BDA information DB 391, and it also downloads the AP number, AP use, AP installation location, search interval and condition, and the like from an AP information DB 498 and stores the downloaded information in the AP environment information DB 393 of the local search server 300.

The customer recognition method according to the present invention comprises a customer recognition information creating step (S30) for creating customer recognition information by linking the customer information and the attendant information of the service provider based on the filtered customer's BDA information and transmitting the customer recognition information to the attendant of the service provider.

In the present invention, the central server 400 receives the search information transmitted from a plurality of local search servers 300, creates customer recognition information by linking the customer information and the attendant information of the service provider based on the search information, and transmits the customer recognition information to a terminal 500 of the attendant. To this end, it is necessary for the central server 400 to be sufficiently provided with the CPU, memory, hard disk, and the like of server equipment.

In the present invention, the central server 400 comprises a search information receiving unit 410 for receiving the customer's BDA information transmitted from the local search server 300.

In the present invention, the search information receiving unit 410 receives the customer's BDA information, AP number, AP use, AP installation location, customer number, actual search date and time, and the like from the search information transmitting unit 330 of the local search server 300, and transfers the received information to a customer information creating unit 420 and an attendant information creating unit 430.

In the present invention, the customer information creating unit 420 creates customer information from the customer information DB using the customer's BDA information. At this point, the customer information DB preferably comprises a reservation information DB 491, a visit schedule information DB 492, and a customer master information DB 493.

The reservation information DB 491 is a database for storing information on customers' reservation of a business place, such as a reserved date and time, a customer number, a business place, the number of customers, and remarks.

The visit schedule information DB 492 is not for regular customers, but a database for storing information on customers who need to be specially cared by an attendant of the service provider even when the customers unexpectedly visit the business place although the customers did not previously book the business place. The visit schedule information DB 492 stores information on visits to a place other than the business place (e.g., lobby or customer desk) made by the customers specially cared by the service provider, such as a scheduled visit date and time, a customer number, purpose of visit of the customer, an attendant, and remarks.

The customer master information DB 493 is a database for registering and storing various kinds of personal information of all customers to be provided with the customer recognition service according to the present invention, such as a customer number, a customer name, pictures, an age, a company, a position, and features.

In the present invention, the attendant information creating unit 430 creates attendant information from the attendant information DB using the AP number and the customer's BDA information and the like. The attendant information includes information on a terminal assigned to an AP for a registered customer and information on an employee assigned to the customer. If the information on a terminal assigned to an AP of the former case is used, it is advantageous in that an attendant taking over the terminal can consistently provide the customer with a service even when an attendant is changed due to a work shift, transference to another branch, or resignation of a previous attendant. If the information on an employee assigned to a customer of the latter case is used, it is advantageous in that the service provider can assign an attendant to provide a specific customer with a dedicated service. Therefore, if these two pieces of information are used to make up for each other, it will be further effective.

In the present invention, the attendant information DB preferably comprises a per-AP terminal assignment management DB 494, a terminal management DB 495, a per-customer employee assignment management DB 496, and an employee management DB 497.

The per-AP terminal assignment management DB 494 stores terminal numbers respectively assigned to APs. The terminal management DB 495 is a database for storing information on terminals for transmitting customer recognition information created by the central server 400 to an attendant of a service provider, such as a terminal number, an IP address, an employed device, an organization code, a place, and a delete interval. The employed device can be, for example, a desktop computer, a notebook computer, a personal digital assistant (PDA), a mobile phone, or any other information communication device that will be used by the attendant of a service provider.

The per-customer employee assignment management DB 496 stores information on attendants of a service provider assigned to each customer. The employee management DB 497 stores information on attendants of a service provider who will receive the customer recognition information, such as an attendant number, an attendant name, an attendant cellular phone number, and an organization code.

In the customer recognition method according to the present invention, the customer information creating unit 420 receives the customer's BDA information transferred from the search information receiving unit 410, and the customer information creating unit 420 transfers the customer's BDA information to the customer master information DB 493 and obtains information on the customer such as a customer number, a customer name, pictures, an age, a company, a position, features, and a BDA from the customer master information DB 493. Next, the customer information creating unit 420 confirms specific information on the customer from the reservation information DB 491 or the visit schedule information DB 492. This will be described below in further detail.

In the present invention, the customer information creating unit 420 inquires the customer master information DB 493 using the customer number such as the customer's BDA information or the like, and secures personal information of a registered customer, such as a name, pictures, an age, a company, a position, features, and peculiar facts. If the AP use of the search information is for a business place, it is preferable to inquire the reservation information DB 491 using an actual search date and time and the customer number and to secure a reserved date and time, a customer number, a business place, the number of customers, remarks, and the like as reservation information. If the AP use of the search information is for a general purpose, it is preferable to inquire the visit schedule information DB 492 using an actual search date and time and the customer number and to secure a scheduled visit date and time, a customer number, a purpose of visit of the customer, an attendant, remarks, and the like as visit schedule information. The customer information creating unit 420 confirms specific information on the customer using the customer's personal information, reservation information, visit schedule information, and the like, and creates customer information.

In the customer recognition method according to the present invention, if the specific information on the customer is confirmed, information on an attendant assigned to the customer is extracted. At this point, the attendant information includes information on a terminal assigned to an AP, information on an employee assigned to a customer, and the like.

In the customer recognition method according to the present invention, the attendant information creating unit 430 extracts and determines an attendant of the service provider from the per-AP terminal assignment management DB 494, the terminal management DB 495, the per-customer employee assignment management DB 496, and the employee management DB 497 based on the customer information.

In the present invention, a customer recognition information creating unit 440 creates customer recognition information by linking the customer information and the attendant information of the service provider. The customer recognition information is information that is transmitted to an attendant of the service provider and efficiently used to provide the customer with an initial service. The customer recognition information includes, for example, an actual search date and time, an AP installation location, customer's personal information, reservation information, visit schedule information, and the like. The customer recognition information is preferably stored in a customer recognition state DB 499. The customer recognition state DB 499 stores the customer recognition information, a unique terminal number, an AP number, a customer number, and the like.

In the customer recognition method according to the present invention, the customer recognition information transmitting unit 450 transmits the customer recognition information to an attendant of the service provider.

In the present invention, the customer recognition information transmitting unit 450 transmits the customer recognition information to an attendant of the service provider or a terminal managed by the attendant. If the terminal is a desktop computer, a notebook computer, or a PDA, the customer recognition information is transmitted to the terminal, and if the terminal is a mobile phone, the customer recognition information is transmitted to the phone number of the mobile phone in a mobile phone character message service provided by a mobile communication company.

In the present invention, the central server 400 may further comprise a customer recognition state analysis unit 460 for creating the customer recognition information as useful data by analyzing and using the customer recognition information. The customer recognition state analysis unit 460 may be provided with needed data from the customer recognition state DB 499 that stores the customer recognition information created by the customer recognition information creating unit 440. The customer recognition state analysis unit 460 may analyze quality of the customer recognition service provided to the customer, personal likings and inclination of the customer, business places or locations preferred by the customer, and the like. The customer recognition information creating unit 440 preferably provides the customer recognition information for the customer recognition state DB 499.

In the present invention, the central server 400 preferably further comprises an AP information DB 498. The AP information DB 498 is a database for managing detailed information on APs installed in the local search server 300, and stores an AP number, an AP use, an AP installation location, a search interval, a search condition, and the like. At this point, the AP use can be divided into a business place purpose and a general purpose, and the search interval is a time period of the access point 200 for periodically detecting a BDA of a mobile phone possessed by a customer entering a service search area. The search condition is a time condition that is set to prevent the same access point 200 to repeatedly detect the same BDA within a predetermined time period (e.g., 30 minutes to 3 hours). Accordingly, BDA information detected again before the search condition is elapsed is discarded, and only the BDA information detected after the search condition is elapsed is selectively filtered.

The customer recognition method according to the present invention comprises a customer information utilizing step (S40), in which an attendant receives the customer recognition information, and the attendant of the service provider recognizes the customer recognition information and then performs an appropriate action.

In the present invention, the attendant of the service provider possesses a portable terminal 500, confirms the customer recognition information transmitted from the central server 400 through the terminal 500, and provides an appropriate service.

In the present invention, the terminal 500 comprises a customer recognition information receiving unit 510 for receiving the customer recognition information transmitted from the central server 400, and a display unit 520 for allowing an attendant of the service provider to confirm the received customer recognition information through five senses.

In the present invention, the terminal 500 may be any one selected from the group consisting of a desktop computer, a notebook computer, a PDA, and a mobile phone. The terminal 500 is preferably a desktop computer, a notebook computer, or a PDA within 50 meters from the access point 200, and when the terminal is to be used regardless of the distance from the access point 200, the terminal is preferably a mobile phone. At this point, the terminal 500 configures the customer's name, picture, age, company name, position, features, reservation information, visit schedule information, and the like based on the customer recognition information transmitted from the central server 400, and transmits the configured information to an attendant of the service provider.

In the present invention, the terminal 500 may further comprise an employee confirming unit 530 for confirming whether or not needed services are provided by an attendant of the service provider after the attendant confirms the customer information and kindly greets the customer. If it is confirmed through the employee confirming unit 530 that the services are provided, the fact of providing the services is notified to the customer recognition state DB 499, and internal information of the customer recognition state DB 499 is updated. If the terminal 500 is a mobile phone, the customer recognition information transmitted from the central server 400 can be displayed on the display unit 520 in the form of a character message.

When the customer information is provided through the terminal 500, the attendant of the service provider immediately recognizes the customer information including the customer's name, picture, company name, position, features, reservation information, visit schedule information, and the like, approaches and warmly and politely greets the customer, and guides the customer to a reserved place or the like.

In addition, the attendant of the service provider inputs whether or not needed services are provided through the employee confirming unit 530 of the terminal after providing the customer with the services, and the confirmation information is stored in the customer recognition state DB 499. The information stored in the customer recognition state DB 499 can be used as base data for improving services provided to customers in the future or can be used as various analysis data for the customer recognition service.

The customer recognition method and the customer recognition system according to the present invention provide the following advantages.
(1) Since most of people possess a mobile phone mounted with a Bluetooth module in these days, if a service provider registers the BDA of a customer's mobile phone under the agreement of the customer, the customer is not required to possess an additional information communication device at all, and simply the customer's mobile phone can be used. This is the most advantageous point of the customer recognition service provided by the service provider to customers without requesting a special behavior from the customers.
(2) When a customer approaches a search area of a service provider, any special behavior is not requested from the customer while the service provider automatically recognizes the customer, and thus the customer does not feel any inconvenience.
(3) Since an additional information communication device does not need to be provided to the customer, the service provider does not need to purchase or maintain additional information communication devices to construct a customer recognition system. Therefore, the service provider may greatly save the cost for constructing the customer recognition system. In addition, if the present invention is used, the service provider may promptly and perfectly recognize customers in a simple and convenient manner.
(4) A plurality of access points 200 can be installed in a plurality of areas, and a plurality of access points 200 can be installed in each of the areas. If the local search server 300 of each area searches for, filters, and transmits BDA information to the central server 400, it is possible to prevent generation of overload on the network or the central server 400.

The customer recognition method and the customer recognition system according to the present invention are described above through a specific embodiment. However, the scope of the present invention is not limited to the embodiment described and illustrated above but is defined by the appended claims. It will be apparent that those skilled in the art can make various modifications and changes thereto within the scope of the invention defined by the claims. Therefore, the true scope of the present invention should be defined by the technical spirit of the appended claims.

## Claims

1. A customer recognition method for providing services to customers using an information communication device, the method comprising:
a customer's BDA information searching step (S10) of allowing an access point (AP) installed by a service provider to communicate with a Bluetooth communication device of a customer and to search for Bluetooth device address (BDA) information of the customer and transmit it to a local search server when the customer enters a search area of the service provider while possessing a mobile phone as the information communication device;
a customer's BDA information filtering step (S20) of determining whether or not the customer's BDA information is registered BDA information of a customer to be managed by the service provider and extracting and transmitting only customer's BDA information matching to a search condition to a central server;
a customer recognition information creating step (S30) of extracting customer information from a customer information database (DB) using the filtered customer's BDA information, confirming reservation and visit information, extracting and determining information on an attendant of the service provider from an attendant information DB, creating customer recognition information by linking the customer information and the attendant information, and transmitting the customer recognition information to an attendant of the service provider; and
a customer information utilizing step (S40) of receiving the customer recognition information from a terminal of the attendant of the service provider and externally displaying the customer information on a display unit of the terminal.

2. The method as claimed in claim 1, wherein in the customer's BDA information searching step (S10), Bluetooth AP hardware of the access point (200) is set to have a transmission power of -18 to 18 dB and a reception power of 1 to 4 dB.

3. The method as claimed in claim 1, wherein the access point (200) has a Bluetooth communication search range of 30 to 60 meters, and the access point (200) performs Bluetooth communication with a portable terminal of the customer, wherein the access point (200) serving as a master and the portable terminal of the customer serving as a slave perform only a basic search step in an operation of four consecutive steps.

4. The method as claimed in claim 1, wherein in the customer's BDA information filtering step (S20), it is confirmed whether or not the customer's BDA information received from the access point (200) is BDA information of a customer previously registered by the service provider; if there are one or more pieces of same customer's BDA information within a search interval, the customer's BDA information is determined as duplicated customer's BDA information, and the duplicated customer's BDA information is discarded; and if the customer's BDA information is detected two or more times within the search condition from a final search time, the duplicated customer's BDA information is discarded, thereby preventing generation of overload on the Internet or the central server (400).

5. The method as claimed in claim 4, wherein the search condition is set to 30 minutes to 3 hours depending on a type of service provided by the service provider.

6. The method as claimed in claim 4, wherein in the customer's BDA information filtering step (S20), a BDA filter unit (320) secures a customer number of the registered customer from a customer BDA information DB (391), secures an AP number, an AP use, an AP installation location, and the like from an AP environment information DB (393), updates an actual search time with a final search time into a BDA search information DB (392), and transfers the customer's BDA information, AP number, AP use, AP installation location, actual search date and time, and the like to a search information transmitting unit (330), and the search information transmitting unit (330) places the customer's BDA information, AP number, AP use, AP installation location, customer number, actual search date and time, and the like as search information and transmits the search information to the central server (400).

7. The method as claimed in claim 1, wherein in the customer recognition information creating step (S30), a customer information creating unit (420) creates customer information from a customer information DB, wherein the customer information DB comprises a reservation information DB (491), a visit schedule information DB (492), and a customer master information DB (493); and an attendant information creating unit (430) creates attendant information from the attendant information DB, wherein the attendant information DB comprises a per-AP terminal assignment management DB (494), a terminal management DB (495), a per-customer employee assignment management DB (496), and an employee management DB (497).

8. A customer recognition system comprising:
local search servers (300) installed a plurality of areas;
a central server (400) connected to each of the local search servers, for collecting various kinds of information transmitted from the local search servers, processing the collected information, and creating specific valid information;
a plurality of terminals (500) connected to the central server to use information transmitted from the central server,
wherein the local search server (300) comprises:
a BDA search unit (310) for issuing a command for an access point (200) installed by a service provider to detect existence of a Bluetooth communication device within a search area at intervals of 7 to 15 seconds and receiving detected customer's BDA information from the access point (200);
a BDA filter unit (320) for filtering the customer's BDA information by determining whether or not the customer's BDA information received from the BDA search unit (310) is BDA information of a customer registered in a customer BDA information DB (391) and removing information repeated within a search condition of 30 minutes to 3 hours; and
a search information transmitting unit (330) for transmitting the filtered customer's BDA information to the central server,
wherein the central server (400) comprises:
a search information receiving unit (410) for receiving the customer's BDA information transmitted from the local search server (300);
a customer information creating unit (420) for creating customer information from a customer information DB using the received customer's BDA information;
an attendant information creating unit (430) for creating attendant information from an attendant information DB using the received customer's BDA information;
a customer recognition information creating unit (440) for creating customer recognition information by linking the customer information and the attendant information; and
a customer recognition information transmitting unit (450) for transmitting the customer recognition information to an attendant of the service provider, and
wherein the terminal (500) comprises:
a customer recognition information receiving unit (510) for receiving the customer recognition information transmitted from the central server; and
a display unit (520) for allowing the attendant of the service provider to confirm the received customer recognition information through five senses.

9. The system as claimed in claim 8, wherein the central server (400) further comprises a customer recognition state DB (499) for storing the customer recognition information and a customer recognition state analysis unit (460) for creating useful data by analyzing and using the customer recognition information.

10. The system as claimed in claim 8, wherein the central server (400) further comprises an AP information DB (498), wherein the AP information DB (498) is a database for managing detailed information on the access point installed in the local search server (300) and stores an AP number, an AP use, an AP installation location, a search interval, and a search condition.
